# EUROPEAN PATENT SPECIFICATION

(11) **EP 3 184 838 B1**
(45) Date of publication and mention of the grant of the patent: **14.11.2018**
(21) Application number: 16002558.1
(22) Date of filing: 01.12.2016
(51) Int. Cl.: F16D 13/75

(54) **VEHICLE CLUTCHES**
FAHRZEUGKUPPLUNG
EMBRAYAGESDE VÉHICULE

(30) Priority: 21.12.2015 GB 201522509
(43) Date of publication of application: 28.06.2017
(73) Proprietor: AP Automotive Products Srl, 60030 Moie di Maiolati (IT)
(72) Inventor: Mazzarini, Nicola, 60035 Jesi (IT)
(74) Representative: Morrall, Roger

(56) References cited:
- EP-A2- 2 778 458
- US-A- 5 560 463
- US-A- 5 884 741

## Description

This invention relates to vehicle clutches and in particular to such clutches which include a wear adjuster and which transmit drive from a vehicle engine to an associated vehicle transmission. Document EP 2 778 458 A2 describes an example of such a clutch.

There have been many attempts to provide a vehicle clutch which has a wear adjuster but most of these prior designs have been complex in construction and have also suffered from poor long term reliability rendering themselves in effective as adjusters well before the clutch is worn out.

It is an object of the present invention to provide an improved form of vehicle clutch which is simple in construction and reliable in operation.

Thus according to the present invention there is provided a friction clutch for a motor vehicle, the clutch comprising a pressure plate biased towards an associated flywheel by a diaphragm spring, a clutch drive disc for clamping between the pressure plate and the associated flywheel, and a ramp type wear adjuster located in the thrust path between the diaphragm spring and the pressure plate to compensate for wear of the drive disc, the wear adjuster comprising a first ramp means nearest to the pressure plate and a second ramp means in contact with the first ramp means but further away from the pressure plate, the first and second ramp means being relatively rotatable about the axis of rotation of the pressure plate by an adjuster spring means to increase the combined effective thickness of the ramp means and hence maintain the travel of the diaphragm spring substantially constant as the clutch disc wears, the wear adjuster also including a wear sensor in the form of pin means carried in bore means in the pressure plate and held relative to the pressure plate by a friction grip, one end of the pin means engaging the flywheel when the clutch is engaged and the other end of the pin means contacting a hold down member connected with the second ramp means, the pin means being pushed through the bore means towards the flywheel as the clutch disc wears, the clutch being characterised in that the hold down member is elastically deformable on movement of the pin means in the bore towards the flywheel, thus as the clutch disc wears and the pin means is pushed through the bore means the elastic hold down member is loaded so that, after sufficient wear has occurred, when the clutch is released, the loading of the hold down member due to clutch disc wear biases the ramp means apart to allow a gap to occur between the first and second ramp means which is dependent on clutch disc wear, so that the adjuster spring means can rotate the two ramp means relative to each other and thus increase the combined effective thickness of the ramp means to maintain the position and inclination (angle) of the diaphragm spring substantially constant as the clutch disc wears.

The use of an elastic hold down member removes the need for a separate spring means to separate the ramp rings when the clutch is released to allow adjustment of the clutch for wear. This simplifies the construction making the clutch cheaper to manufacture and easier to assemble and improves reliability.

The friction grip may be provided by a self-griping washer carried on the pressure plate whose inner periphery grips the pin means.

The other end of the pin means may have a head portion which extends through a hole in an end portion of the hold down means to hold the end portion of the hold down member against a shoulder on the pin.

To provide a balanced set up a plurality of wear sensors may be provided at circumferentially spaced locations on the pressure plate.

Lift straps may be provided which act on the pressure plate to lift the pressure plate away from the drive disc when the clutch is released and the lift straps may lie over the gripping washers to hold the washers in recesses surrounding the bores in the pressure plate.

The adjuster spring means may comprise coil springs which act circumferentially between the two ramp means.

The present invention will now be described, by way of example only with reference to the accompanying drawings in which:-
Figure 1 shows a radial section through part of a friction clutch in accordance with the present invention in an unworn clutch engaged position;
Figure 2 shows a sectional view on line A-A of Figure 1;
Figure 3 shows the embodiment of Figure 1 with the clutch disengaged and about to make a wear adjustment;
Figure 4 shows the embodiment of Figure 1 with the clutch engaged after a wear adjustment has occurred, and
Figures 5 and 6 show plan and edge views respectively of part of an adjuster ramp arrangement used in the adjuster of the present invention.

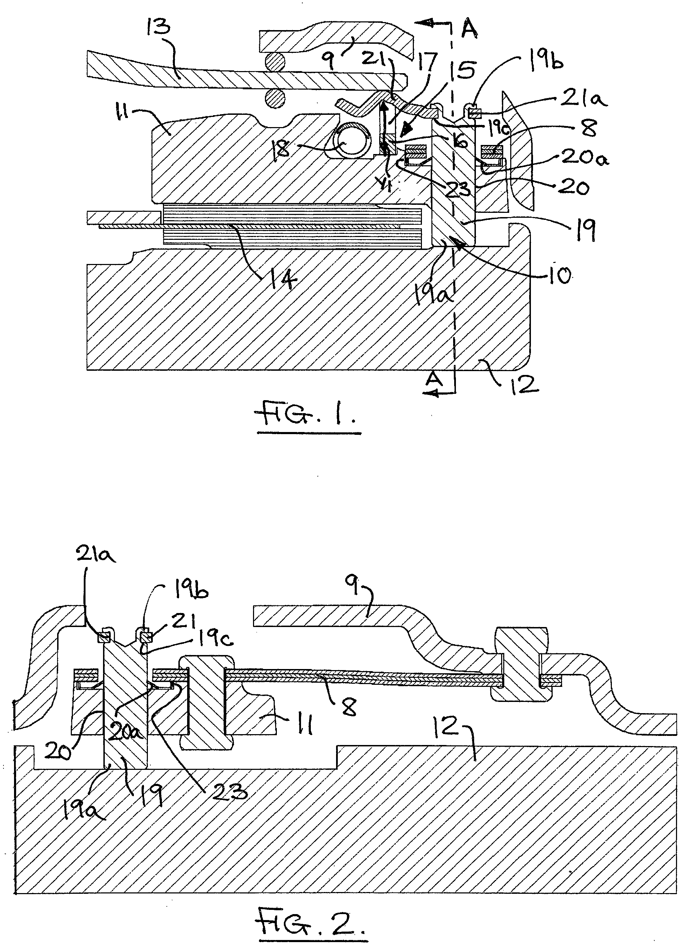

Referring to the drawings, a vehicle friction clutch 10 in accordance with the present invention has a pressure plate 11 biased towards an associated flywheel 12 by a diaphragm spring 13 supported from a clutch cover 9. A clutch drive disc 14 is provided for clamping between the pressure plate 11 and the flywheel 12 and a ramp type wear adjuster 15 is located in the thrust path between the diaphragm spring 13 and the pressure plate 11 to compensate for wear of the drive disc 14. Lift straps 8 (see Figure 2) are provided at circumferentially spaced locations between the cover 9 and the pressure plate 11 to ensure that the pressure plate 11 lifts away from the flywheel when the clutch is disengaged.

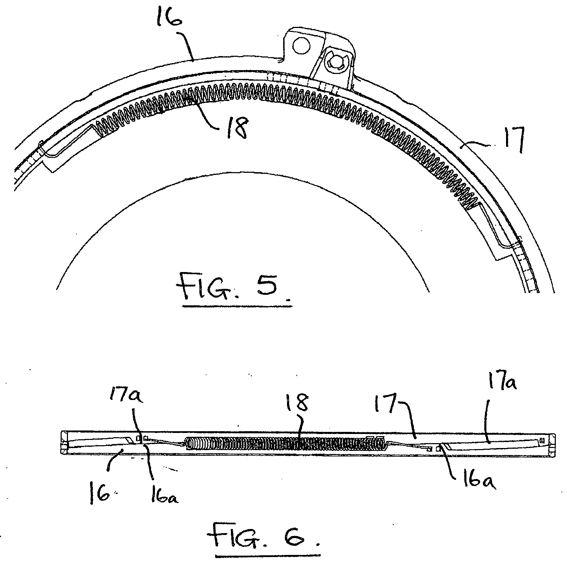

The wear adjuster 15 comprises a first ramp means in the form of a ring 16 nearest to the pressure plate 11 and a second ramp means in the form of a second ring 17 which is in contact with the first ring 16 but further away from the pressure plate and is also in contact with the diaphragm spring13. As can best be seen from Figures 5 and 6, the first and second rings 16 and 17 are relatively rotatable about the axis of rotation of the pressure plate by adjuster spring means in the form of coils springs 18 and the rings 16 and 17 have contacting ramp surfaces 16a and 17a respectively which cooperate when the rings are rotated relative to each other by springs 18 to increase the combined effective thickness (see Y1 in Figure 1) of the rings to adjust the clutch for wear of the disc 14 as will be explained below.

The wear adjuster also includes a wear sensor in the form of a sensor pin 19 which extends through a bore 20 in the pressure plate 11. A self-gripping washer 20a surrounds each pin 19. The inner periphery of each washer 20a grips the associated pin 19 to provide frictional resistance to the movement of pin 19 in bore 20. The washer 20a is housed in a recess 23 in the pressure plate 11. The washer is held in its bore by the lift straps 8 which lie over the washer.

One end 19a of the pin 19 engages the flywheel 12 when the clutch is engaged (see Figure 1) and the pin is pushed through the bore 20 against the friction grip provided by washer 20a as the friction disc wears14. The other end of the pin 19 has a head portion 19b which extends through a hole 21a in an end portion of a hold down member 21 and is riveted over at 19b to hold the end portion of the hold down member against a shoulder 19c on the pin which provides a first abutment. The hold down member 21 is connected with or integrally formed with the second ramp ring 17.

In accordance with the present invention the hold down member 21 is elastically deformable and operates as leaf lift spring.

In a typical construction there will be three sensor pins 19 positioned at 120 degree intervals around the pressure plate 11 to provide a balance arrangement. Each sensor pin may conveniently be associated with a respective lift strap 8. Other numbers of sensor pins and lift straps can be employed if desired.

When the clutch is engaged by the diaphragm spring 13 there is a solid metal thrust path from diaphragm spring 13 via ramp rings 16 and 17 to pressure plate 11.

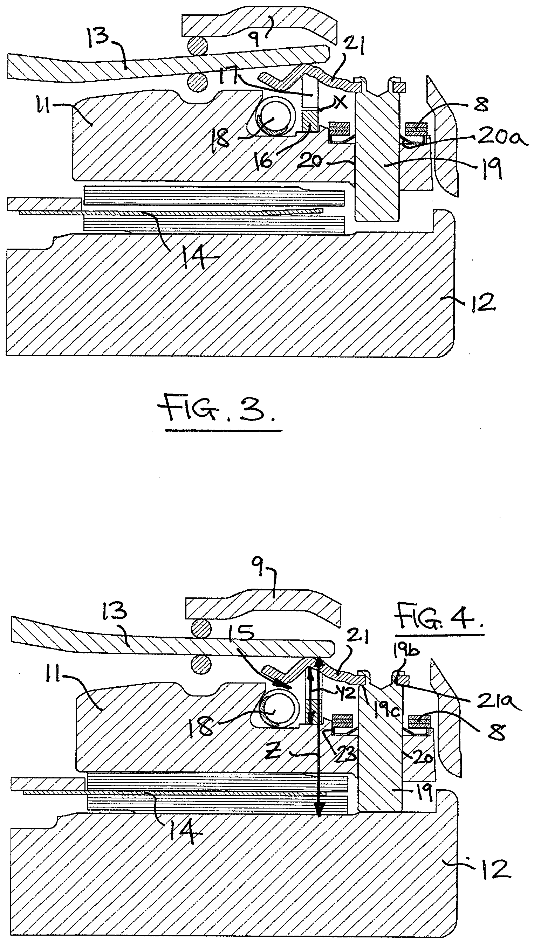

As the clutch disc 14 wears, the pins 19 are pushed through the bores 20 to load the elastic hold down member leaf spring members 21 so that, after sufficient wear has occurred, when the clutch is released, the loading of the elastic hold down members 21 due to clutch disc wear, overcomes the effect of lift straps 8 (which tend to bias the ramp rings 16 and 17 towards each other) and biases the ramp rings 16 and 17 apart to allow a gap X to occur between the ramp rings (see Figure 3). This gap is dependent on clutch disc wear and allows the adjuster springs 18 to rotate the two ramp rings relative to each other and thus increase the combined effective thickness of the ramp rings from Y1 in Figure 1 to Y2 in Figure 4. Figure 4 shows the adjusted clutch in the engaged condition immediately after a wear adjustment has been made when it can be seen that the distance Z of the diaphragm spring from the flywheel is the same as in Figure 1 so that the position and inclination (angle) of the diaphragm spring during operation of the clutch remains substantially constant as the clutch disc wears.

The use of an elastic hold down member 21 removes the need for a separate spring means to separate the ramp rings 16 and 17 when the clutch is released to allow adjustment of the clutch for wear.

As can be seen from the above the present invention provides a simple but effective wear adjuster mechanism for a vehicle clutch which is also reliable in operation.

## Claims

1. A friction clutch (10) for a motor vehicle, the clutch comprising a pressure plate (11) biased towards an associated flywheel (12) by a diaphragm spring (13), a clutch drive disc (14) for clamping between the pressure plate and the associated flywheel, and a ramp type wear adjuster (15) located in the thrust path between the diaphragm spring and the pressure plate to compensate for wear of the drive disc, the wear adjuster comprising a first ramp means (16) nearest to the pressure plate and a second ramp means (17) in contact with the first ramp means but further away from the pressure plate, the first and second ramp means (16,17) being relatively rotatable about the axis of rotation of the pressure plate by an adjuster spring means (18) to increase the combined effective thickness (Y1) of the ramp means and hence maintain the travel of the diaphragm spring substantially constant as the clutch disc wears, the wear adjuster also including a wear sensor in the form of pin means (19) carried in bore means (20) in the pressure plate (11) and held relative to the pressure plate by a friction grip (20a), one end (19a) of the pin means (19) engaging the flywheel (12) when the clutch is engaged and the other end (19b, 19c) of the pin means contacting a hold down member (21) connected with the second ramp means (17), the pin means (19) being pushed through the bore means (20) towards the flywheel (12) as the clutch disc (14) wears, the clutch being **characterised in that** the hold down member (21) is elastically deformable on movement of the pin means (19) in the bore means (20) towards the flywheel, thus as the clutch disc (14) wears and the pin means is pushed through the bore means the elastic hold down member (21) is loaded so that, after sufficient wear has occurred, when the clutch is released, the loading of the elastic hold down member (21) due to clutch disc wear biases the ramp means (16,17) apart to allow a gap (X) to occur between the first and second ramp means (16,17) which is dependent on clutch disc wear, so that the adjuster spring means (18) can rotate the two ramp means relative to each other and thus increase the combined effective thickness (Y2) of the ramp means to maintain the position and inclination (angle) of the diaphragm spring (13) substantially constant as the clutch disc wears.

2. A clutch according to claim 1 **characterised in that** the friction grip is provided by a self-griping washer (20a) carried on the pressure plate (11) whose inner periphery grips the pin means (19).

3. A clutch according to any claim 1 or 2 **characterised in that** the other end of the pin means (19) has a head portion (19b) which extends through a hole (21a) in an end portion of the hold down means (21) to hold the end portion of the hold down member against a shoulder (19c) on the pin.

4. A clutch according to any one of claims 1 to 3 **characterised by** being provided with a plurality of wear sensors (15) at circumferentially spaced locations on the pressure plate (11).

5. A clutch according to claim 1 or 4 **characterised in that** lift straps (8) act on the pressure plate (11) to lift the pressure plate away from the drive disc (14) when the clutch is released and the lift straps lie over the gripping washers (20a) to hold the washers in recesses (23) surrounding the bores (20) in the pressure plate.

6. A clutch according to any one of claims 1 to 5 **characterised in that** the adjuster spring means comprises coil springs (18) which act circumferentially between the two ramp means (16,17).

## Patentansprüche

1. Reibungskupplung (10) für ein Kraftfahrzeug, wobei die Kupplung umfasst: eine Druckplatte (11), die durch eine Membranfeder (13) zu einem zugehörigen Schwungrad (12) hin vorgespannt ist, eine Kupplungstreibscheibe (14) zum Einspannen zwischen der Druckplatte und dem zugehörigen Schwungrad, und eine Rampenverschleißeinstelleinrichtung (15), die im Schubweg zwischen der Membranfeder und der Druckplatte angeordnet ist, um den Verschleiß der Treibscheibe auszugleichen, wobei die Verschleißeinstelleinrichtung ein erstes Rampenmittel (16), das der Druckplatte am nächsten ist, und ein zweites Rampenmittel (17) aufweist, das mit dem ersten Rampenmittel in Kontakt steht, jedoch weiter von der Druckplatte entfernt ist, wobei das erste und zweite Rampenmittel (16, 17) durch ein Einstellfedermittel (18) relativ um die Drehachse der Druckplatte drehbar sind, um die kombinierte effektive Dicke (Y1) der Rampenmittel zu erhöhen und somit den Weg der Membranfeder im Wesentlichen konstant zu halten, wenn sich die Kupplungsscheibe abnutzt, wobei die Verschleißeinstelleinrichtung auch einen Verschleißsensor in Form eines Stiftmittels (19) aufweist, das in einem Bohrungsmittel (20) in der Druckplatte (11) aufgenommen ist und durch einen Reibungshalt (20a) relativ zur Druckplatte gehalten wird, wobei ein Ende (19a) des Stiftmittels (19) mit dem Schwungrad (12) in Eingriff steht, wenn die Kupplung eingerückt ist, und das andere Ende (19b, 19c) des Stiftmittels mit einem Niederhalteelement (21) in Kontakt steht, das mit der zweiten Rampeneinrichtung (17) verbunden ist, wobei das Stiftmittel (19) durch das Bohrungsmittel (20) zum Schwungrad (12) hin gedrückt wird, wenn sich die Kupplungsscheibe (14) abnutzt, wobei die Kupplung **dadurch gekennzeichnet ist, dass** das Niederhalteelement (21) bei Bewegung des Stiftmittels (19) im Bohrungsmittel (20) zum Schwungrad hin elastisch verformbar ist, so dass das elastische Niederhalteelement (21) beim Verschleiß der Kupplungsscheibe (14) und beim Drücken des Stiftmittels durch das Bohrungsmittel so beansprucht wird, dass nach dem Auftreten eines ausreichenden Verschleißes beim Ausrücken der Kupplung die Beanspruchung des elastischen Niederhalteelements (21) aufgrund von Kupplungsscheibenverschleiß die Rampenmittel (16, 17) voneinander weg treibt, wodurch zwischen dem ersten und zweiten Rampenmittel (16, 17) ein Spalt (X) zugelassen wird, der vom Kupplungsscheibenverschleiß abhängt, so dass das Einstellfedermittel (18) die beiden Rampenmittel relativ zueinander drehen kann und somit die kombinierte wirksame Dicke (Y2) der Rampenmittel erhöht, um die Position und Neigung (Winkel) der Membranfeder (13) mit dem Verschleiß der Kupplungsscheibe im Wesentlichen konstant zu halten.

2. Kupplung nach Anspruch 1, **dadurch gekennzeichnet, dass** der Reibungshalt durch eine auf der Druckplatte (11) gelagerte selbstfixierende Beilegscheibe (20a) vorgesehen ist, deren Innenumfang das Stiftmittel (19) greift.

3. Kupplung nach Anspruch 1 oder 2, **dadurch gekennzeichnet, dass** das andere Ende des Stiftmittels (19) einen Kopfabschnitt (19b) aufweist, der sich durch eine Öffnung (21a) in einem Endabschnitt der Niederhalteeinrichtung (21) erstreckt, um den Endabschnitt des Niederhalteelements gegen eine Schulter (19c) auf dem Stift zu drücken.

4. Kupplung nach einem der Ansprüche 1 bis 3, **dadurch gekennzeichnet, dass** sie mit einer Mehrzahl von Verschleißsensoren (15) an in Umfangsrichtung beabstandeten Stellen auf der Druckplatte (11) vorgesehen ist.

5. Kupplung nach Anspruch 1 oder 4, **dadurch gekennzeichnet, dass** Hebebänder (8) auf die Druckplatte (11) einwirken, um die Druckplatte von der Treibscheibe (14) abzuheben, wenn die Kupplung ausgerückt wird, und die Hebebänder über den Haltebeilegscheiben (20a) liegen, um die Scheiben in Vertiefungen (23) zu halten, die die Bohrungen (20) in der Druckplatte umgeben.

6. Kupplung nach einem der Ansprüche 1 bis 5, **dadurch gekennzeichnet, dass** das Einstellfedermittel Schraubenfedern (18) umfasst, die in Umfangsrichtung zwischen den beiden Rampenmitteln (16, 17) wirken.

## Revendications

1. Embrayage à friction (10) pour un véhicule à moteur, l'embrayage comprenant une plaque de pression (11) sollicitée vers un volant d'inertie (12) associé par un ressort à diaphragme (13), un disque d'entraînement d'embrayage (14) pour le serrage entre la plaque de pression et le volant d'inertie associé, et un ajusteur d'usure de type à rampe (15) positionné dans la trajectoire de poussée entre le ressort à diaphragme et la plaque de pression pour compenser l'usure du disque d'entraînement, l'ajusteur d'usure comprenant un premier moyen de rampe (16) situé le plus à proximité de la plaque de pression et un second moyen de rampe (17) en contact avec le premier moyen de rampe, mais plus éloigné de la plaque de pression, les premier et second moyens de rampe (16, 17) pouvant tourner relativement autour de l'axe de rotation de la plaque de pression grâce à un moyen de ressort d'ajusteur (18) pour augmenter l'épaisseur effective combinée (Y1) du moyen de rampe et par conséquent maintenir le déplacement du ressort à diaphragme sensiblement constant lorsque les disques d'embrayage s'usent, l'ajusteur d'usure comprenant également un capteur d'usure se présentant sous la forme d'un moyen de broche (19) porté dans le moyen d'alésage (20) dans la plaque de pression (11) et maintenu par rapport à la plaque de pression par une pince à friction (20a), une extrémité (19a) du moyen de broche (19) mettant en prise le volant d'inertie (12) lorsque l'embrayage est mis en prise et l'autre extrémité (19b, 19c) du moyen de broche étant en contact avec un élément de retenue (21) raccordé avec le second moyen de rampe (17), le moyen de broche (19) étant poussé à travers le moyen d'alésage (20) vers le volant d'inertie (12) lorsque le disque d'embrayage (14) s'use, l'embrayage étant **caractérisé en ce que** l'élément de retenue (21) est élastiquement déformable suite au déplacement du moyen de broche (19) dans le moyen d'alésage (20) vers le volant d'inertie, ainsi lorsque le disque d'embrayage (14) s'use et que le moyen de broche est poussé à travers le moyen d'alésage, l'élément de retenue élastique (21) est chargé, de sorte que, après l'occurrence de l'usure suffisante, lorsque l'embrayage est relâché, la charge de l'élément de retenue élastique (21) due à l'usure du disque d'embrayage, sollicite le moyen de rampe à (16, 17) à distance pour créer un espace (X) entre les premier et second moyens de rampe (16, 17) qui dépend de l'usure du disque d'embrayage, de sorte que le moyen de ressort d'ajusteur (18) peut faire tourner les deux moyens de rampe l'un par rapport à l'autre et ainsi augmenter l'épaisseur effective combinée (Y2) du moyen de rampe afin de maintenir la position et l'inclinaison (angle) du ressort à diaphragme (13) sensiblement constantes au fur et à mesure que le disque d'embrayage s'use.

2. Embrayage selon la revendication 1, **caractérisé en ce que** la pince à friction est fournie par une rondelle auto-agrippante (20a) portée sur la plaque de pression (11), dont la périphérie interne saisit le moyen de pince (19).

3. Embrayage selon la revendication 1 ou 2, **caractérisé en ce que** l'autre extrémité du moins de broche (19) a une partie de tête (19b) qui s'étend à travers un trou (21a) dans une partie d'extrémité du moyen de retenue (21) pour maintenir la partie d'extrémité de l'élément de retenue contre un épaulement (19c) sur la broche.

4. Embrayage selon l'une quelconque des revendications 1 à 3, **caractérisé en ce qu'**il est prévu avec une pluralité de capteurs d'usure (15) à des emplacements circonférentiellement espacés sur la plaque de pression (11).

5. Embrayage selon la revendication 1 ou 4, **caractérisé en ce que** des sangles de levage (8) agissent sur la plaque de pression (11) pour soulever la plaque de pression du disque d'entraînement (14) lorsque l'embrayage est relâché et les sangles de levage se trouvent sur les rondelles de préhension (20a) pour maintenir les rondelles dans des évidements (23) entourant les alésages (20) dans la plaque de pression.

6. Embrayage selon l'une quelconque des revendications 1 à 5, **caractérisé en ce que** le moyen de ressort d'ajusteur comprend des ressorts hélicoïdaux (18) qui agissent circonférentiellement entre les deux moyens de rampe (16, 17).
